Europäisches Patentamt

(19) European Patent Office

Office européen des brevets

(11) Publication number: **0 172 342**
**A2**

(12) # EUROPEAN PATENT APPLICATION

(21) Application number: **85107331.2**

(22) Date of filing: **13.06.85**

(51) Int. Cl.⁴: **G 06 F 12/06**

(30) Priority: **22.08.84 JP 173432/84**

(43) Date of publication of application:
**26.02.86 Bulletin 86/9**

(84) Designated Contracting States:
**DE FR GB NL**

(71) Applicant: **Nippon Data General Corporation
6-12-20, Jingumae
Shibuya-ku Tokyo(JP)**

(72) Inventor: **Arima, Shigemi
1-23-12, Sama
Gyoda-shi Saitama-ken(JP)**

(72) Inventor: **Nakada, Takashi
2-94, Miyauchi
Kitamoto-shi Saitama-ken(JP)**

(72) Inventor: **Miyashita, Kazuhiro
8-17, Fukami-cho
Gyoda-shi Saitama-ken(JP)**

(72) Inventor: **Iijima, Etsuo
1350-1, Ooazaokabe Okabe-machi
Oosato-gun Saitama-ken(JP)**

(72) Inventor: **Katayama, Hideji
8-4, Ichiriyama-cho
Gyoda-shi Saitama-ken(JP)**

(72) Inventor: **Wadano, Yoshihiko
A-1303, 2-1-1, Yatsu
Ageo-shi Saitama-ken(JP)**

(74) Representative: **Eitle, Werner, Dipl.-Ing. et al,
Hoffmann, Eitle & Partner Patentanwälte Arabellastrasse 4
D-8000 München 81(DE)**

(54) **Bus control gate array.**

㊿ In a computer having a central processing unit (CPU) (9), a common bus (1, 3, 5), a plurality of input and output devices which are connected to the common bus (1, 3, 5) and which have an intrinsic I/O device address, individually, and a bus control gate array, the bus control gate array according to the present invention includes an I/O device address decoder (47). The I/O device address decoder 47 comprises a plurality of gates (53, 55...57) and decodes an I/O device address supplied from the CPU (9) to produce a control signal for selecting the designated I/O device thereto.

./...

FIG. 2

0172342

- 1 -

## Bus control gate array

The present invention relates to a bus control gate array in a data processing system.

In a conventional data processing system, a plurality of input/output devices (to be referred to as I/O devices hereinafter) are connected to a common bus. In order to select a specific I/O device among these I/O devices, an inherent I/O device address is assigned to each I/O device. When a central processing unit (to be referred to as a CPU hereinafter) selects a desired I/O device, the CPU accesses a corresponding I/O device address. In this case, an I/O device address signal corresponding to the desired I/O device is generated from the CPU and supplied to this I/O device through the common bus. Each I/O device has a decoder for determining whether or not the supplied I/O device address signal indicates its own address. In another conventional data processing system comprising a memory system having a plurality of memory banks, a corresponding memory bank address signal is decoded at the memory system side.

However, in the conventional data processing system having the above configuration, all bit lines of an I/O address bus must be connected to each I/O device. Each I/O device comprises a decoder for decoding the I/O device address signal from the CPU through the address bus and the inherent I/O device address. Furthermore, a jumper is required for producing an inherent I/O device address. Therefore, the configuration of the system becomes complicated, resulting in high cost.

It is an object of the present invention to provide a simple bus control gate array for discriminating I/O device addresses.

It is another object of the present invention to provide a simple bus control gate array for discriminating memory bank addresses.

To achieve the above object, in a data processing system having a common bus, a plurality of input/output devices connected to said common bus and assigned with different input/output device addresses, a bus control gate array for controlling said common bus, and a central processing element connected to said common bus to control said plurality of input/output devices and said bus control gate array, the bus control gate array according to the present invention is characterized by comprising input/output device select signal generating means for decoding an input/output device address signal supplied from said central processing element and selecting one of said plurality of input/output devices in accordance with the decoded input/output device address signal.

A more complete understanding of the advantages, structure and operation of the present invention may be had by referring to the following detailed description when taken in conjunction with the accompanying drawings, in which:

Fig. 1 is a block diagram schematically showing the overall configuration of a hand-held computer to which the bus control gate array according to an embodiment of the present invention is applied;

Fig. 2 is a detailed block diagram of the bus control gate array shown in Fig. 1;

Fig. 3 is a detailed block diagram showing input and output signals of the I/O device address decoder shown in Fig. 2;

Fig. 4 is a detailed block diagram of the I/O device address decoder shown in Fig. 3;

Fig. 5 is a detailed block diagram showing a bus control gate array according to another embodiment of the present invention;

Fig. 6 is a block diagram showing input and output signals of a memory address decoder shown in Fig. 5;

Fig. 7 is a detailed block diagram showing the memory address decoder shown in Fig. 6; and

Fig. 8 is a block diagram showing the chip selectors incorporated in the corresponding memory banks and the memory address decoder connected to the memory banks so as to select the banks.

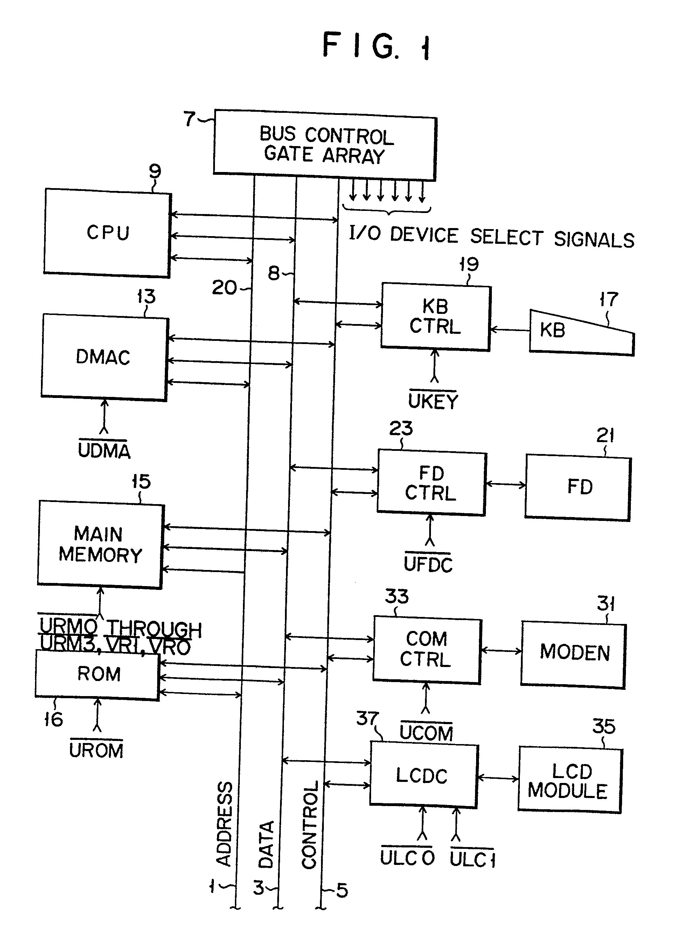

The present invention will now be described in detail with reference to a preferred embodiment. Fig. 1 is a block diagram schematically showing an overall configuration of a hand-held computer to which the present invention is applied. Referring to Fig. 1, a central processing unit (CPU) 9 comprising, e.g., a 16-bit CPU 8088 available from Intel Corp. (U.S.A.), a direct memory access (DMA) controller 13 for controlling high-speed data transfer, a main memory 15, a read only memory (ROM) 16 for storing a control program, a keyboard controller 19 for controlling a keyboard unit 17, a floppy disk controller 23 for controlling a micro floppy disk unit 21, a communication controller 33 for controlling a modem 31, and a liquid crystal display controller (LCDC) 37 for controlling a display unit (LCD module) 35 are connected to an address bus 1, a data bus 3 and a control bus 5. The buses 1, 3 and 5 are controlled by a bus control gate array 7. The bus control gate array 7 decodes I/O device address signals supplied from the CPU 9 through the address bus 1 and produces various I/O device select signals. The I/O device select signals include a signal $\overline{UKEY}$ for

selecting the keyboard controller 19, a signal $\overline{\text{UFDC}}$ for selecting the floppy disk controller 23, a signal $\overline{\text{UCOM}}$ for selecting the communication controller 33, signals $\overline{\text{ULC0}}$ and $\overline{\text{ULC1}}$ for selecting the liquid crystal display controller (LCDC) 37, a signal $\overline{\text{UROM}}$ for selecting the read only memory 16, signals $\overline{\text{URM0}}$ through $\overline{\text{RUM3}}$ for selecting the main memory 15, and a signal $\overline{\text{UDMA}}$ for selecting the DMA controller 13.

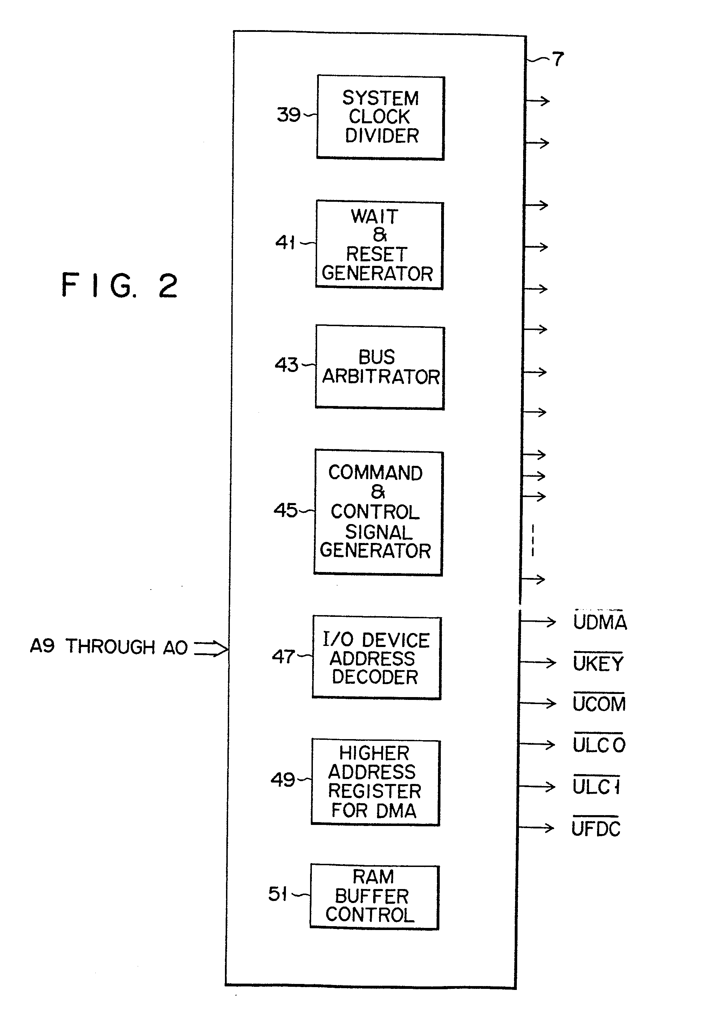

Fig. 2 is a detailed block diagram of the bus control gate array 7 shown in Fig. 1. The bus control gate array 7 has a system clock divider 39, a wait and reset generator 41, a bus arbitrator 43, a command and control signal generator 45, an I/O device address decoder 47, a higher address register 49, and a RAM buffer controller 51. The system clock divider 39 frequency-divides a reference frequency signal from an oscillator (not shown). The wait and reset generator 41 generates a signal indicating that data reception from devices connected to the data bus 3 or the data transmission preparation are completed, a signal indicating that the data reception from the devices connected to the data bus 3 or the data transmission preparation are not yet completed, a reset signal for the CPU 9, a one-wait signal for delaying by one clock a command from the command and control signal generator 45 to be described later, and so on. The bus arbitrator 43 determines which one of the CPU 9 and the DMA controller 13 can use the bus 1 when a contention occurs therebetween. The command and control signal generator 45 discriminates a status signal from the CPU 9 and generates a command control signal in accordance with the discrimination result. The higher address register 49 holds upper bits of an address signal when the DMA controller 13 accesses the main memory 15. The RAM buffer contoller 51 controls data flow between the CPU 9 and the main memory 15 or between the I/O devices. The command and control signal generator 45 has a command decoder (not shown) for decoding status data from the CPU 9 such as an interrupt receive signal, the holding of read and write I/O ports, an instruction fetch, the read and write memory access and so on, and a signal generator (not shown) for generating a command and a control signal in accordance with the decoded status data. The higher address register 49 for direct memory access generates upper address data A16 through A19 when the DMA controller 13 gets the bus control right for the 20-bit address bus.

Although the hand-held computer also includes a conventional bus control gate array, this is not a direct concern of the present invention and a detailed description thereof will be omitted.

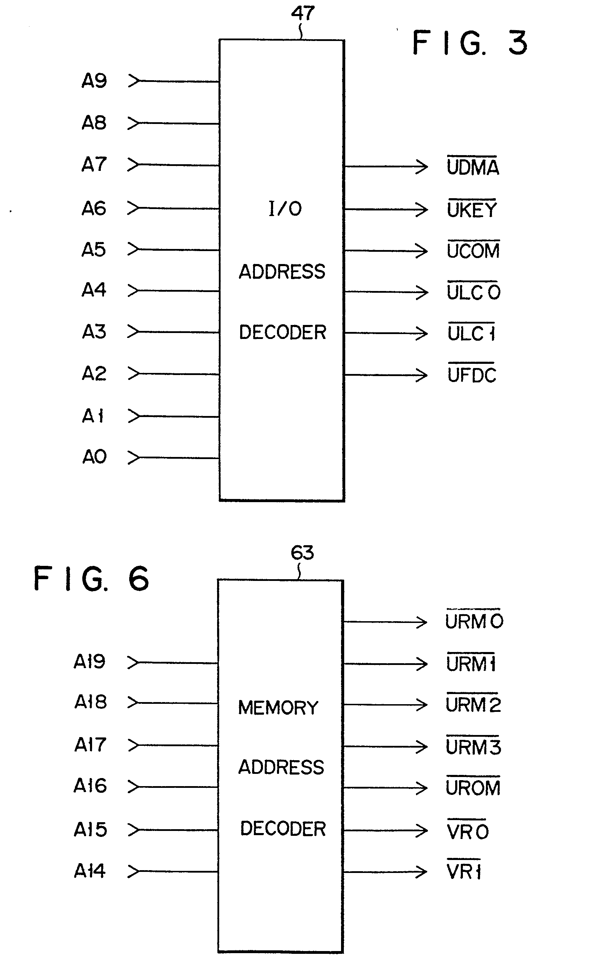

The main feature of the present invention lies in the fact that the bus control gate array 7 comprises the I/O device address decoder 47. As shown in Fig. 3, the I/O device address decoder 47 decodes 10-bit address data (A0 through A9) supplied from the CPU 9 and generates any one of the I/O device select signals $\overline{UKEY}$, $\overline{UFDC}$, $\overline{UCOM}$, $\overline{ULC0}$, $\overline{ULC1}$, $\overline{UROM}$, $\overline{URM0}$ through $\overline{URM3}$, and $\overline{UDMA}$ so as to select the corresponding I/O device. The bus control gate array 7 including the I/O device address decoder 47 comprise a highly integrated one-chip semiconductor device.

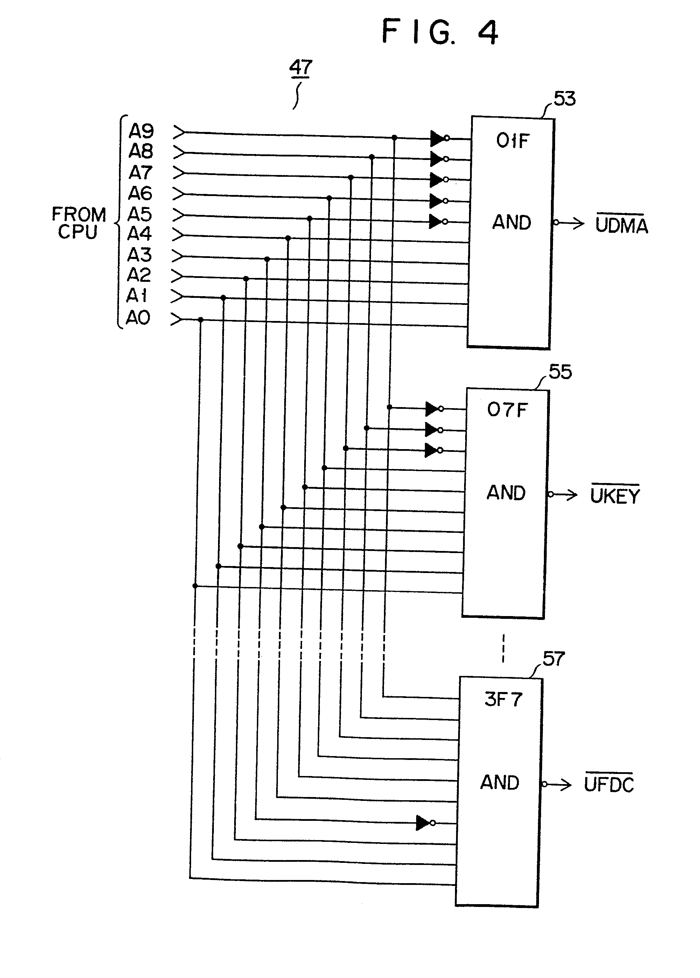

Fig. 4 is a detailed block diagram of the I/O device address decoder 47 shown in Fig. 3. Although only sections for decoding the signals $\overline{UDMA}$, $\overline{UKEY}$ and $\overline{UFDC}$ are shown for illustrative convenience, other sections for decoding the signals $\overline{UCOM}$, $\overline{ULC0}$, $\overline{ULC1}$, $\overline{UROM}$, and $\overline{URM0}$ through $\overline{URM3}$ respectively have a similar arrangement. In this embodiment, I/O device address "01F" (hexadecimal), "07F" (hexadecimal), and "3F7" (hexadecimal) are assigned to the DMA controller 13, the keyboard controller 19, and the floppy disk controller 23, respectively. Different inherent I/O device addresses are assigned to the remaining I/O devices, respectively, and a detailed description thereof is omitted by way of simplicity. An AND gate 53 receives I/O device address data (A0 through A9) from the CPU 9 and generates the signal $\overline{UDMA}$ in response to only the I/O device address data "01F" (hexadecimal). Similarly, an AND gate 55 generates the signal $\overline{UKEY}$ in response to only the I/O device address data "07F" (hexadecimal). An AND gate 57 generates the signal $\overline{UFDC}$ in response to only the I/O device address data "3F7" (hexadecimal).

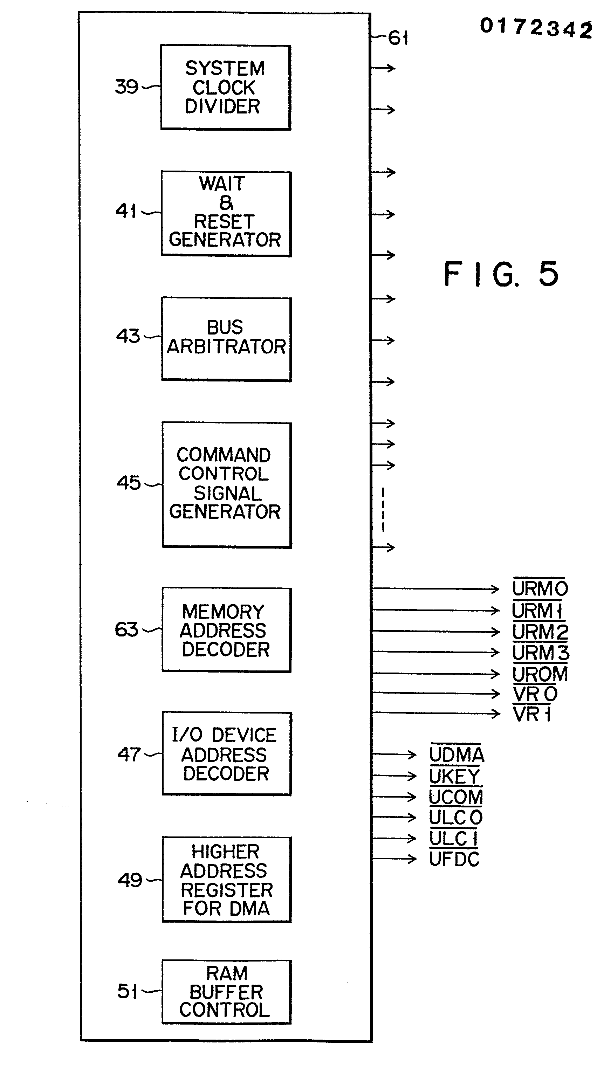

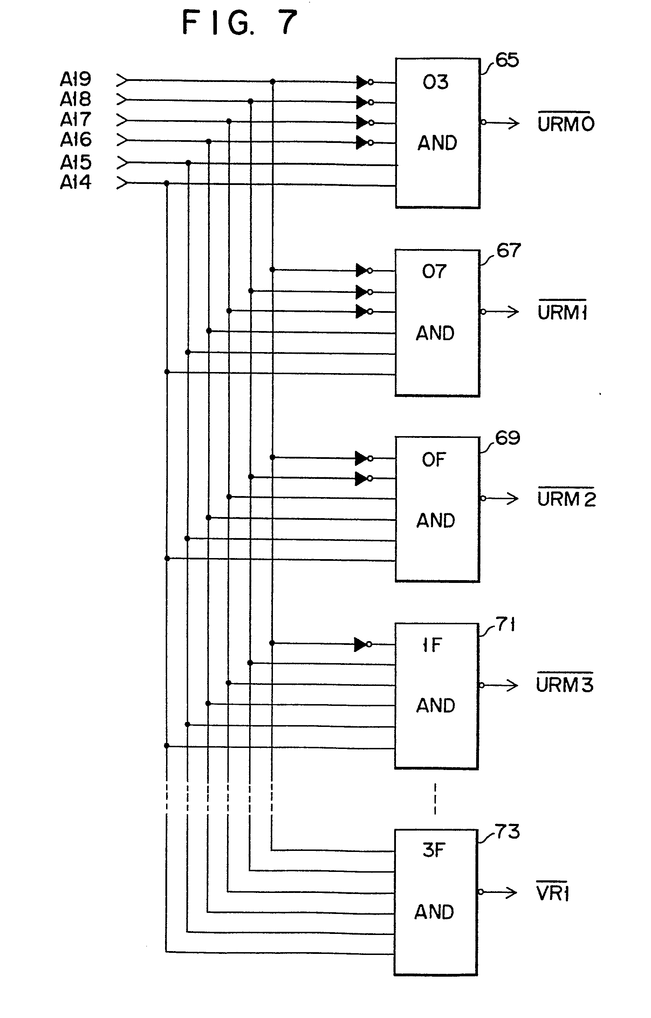

Fig. 5 shows another embodiment of the present invention. The same reference numerals as used in Fig. 2 denote the same parts in Fig. 5 and a detailed description thereof will be omitted. In this embodiment, a bus control gate array 61 has a memory address decoder 63 in addition to the I/O device address decoder 47. The memory address decoder 63 receives upper 6-bit address data supplied through the address bus 1 as shown in Fig. 6 and selectively generates the memory bank select signals $\overline{URM0}$, $\overline{URM1}$, $\overline{URM2}$ and $\overline{URM3}$, the select signal $\overline{UROM}$ for selecting the ROM 16, and video RAM (VRAM) select signals $\overline{VR0}$ and $\overline{VR1}$ for selecting the VRAM area which is assigned in the main memory 15 and which is used for the LCD module 35.

Fig. 7 is a block diagram of the memory address decoder 63 shown in Fig. 5. The memory address decoder 63 comprises AND gates 59, 61, 63 65 and 67 and inverters in the same manner as the I/O device address decoder 47 shown in Fig. 4. In this embodiment, when the upper six bits of the address signal supplied from the CPU 9 represent "03" (hexadecimal), the AND gate 59 generates the select signal $\overline{UROM}$ for selecting a memory bank 0 ($15_1$). Similarly, the AND gate 61 generates the memory bank select signal $\overline{URM1}$ for selecting a memory bank 1 ($15_2$) when the upper six bits represent "07" (hexadecimal). The AND gate 63 generates the memory bank select signal $\overline{URM2}$ for selecting a memory bank 2 ($15_3$) when the upper six bits represent "0F"

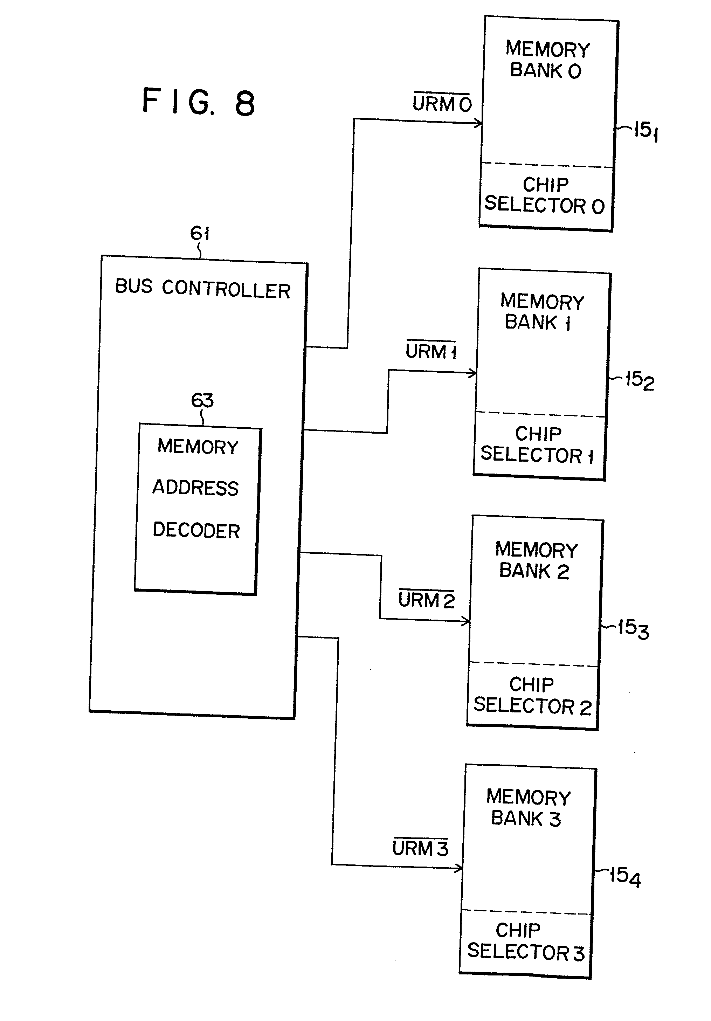

(hexadecimal). The AND gate 65 generates a memory bank select signal $\overline{\text{URM3}}$ for selecting a memory bank 3 ($15_4$) when the upper six bits represent "1F" (hexadecimal). The AND gate 67 generates the $\overline{\text{VRAM}}$ select signal $\overline{\text{VR1}}$ when the upper six bits represent "3F" (hexadecimal). By this operation, each of the memory banks $15_1$ through $15_4$ need comprise only chip selectors 0 through 3, as shown in Fig. 8, thereby simplifying the hardware configuration.

While the bus control gate array has been described in reference to a particular embodiment, and as being used to perform certain data manipulation, it is to be understood that further modifications, alterations, and manipulations may be made and practiced by those having ordinary skill in the art without departing from the spirit and scope of the present invention.

Claims:

1. In a data processing system having a common bus (1, 3, 5), a plurality of input/output devices (13, 15, 16, 19, 23, 33, 37) connected to said common bus and assigned with different input/output device addresses, a bus control gate array (7) for controlling said common bus, and a central processing element (9) connected to said common bus (1, 3, 5) to control said plurality of input/output devices and said bus control gate array, a bus control gate array characterized by comprising input/output device select signal generating means (47) for decoding an input/output device address signal supplied from said central processing element (9) and selecting one of said plurality of input/output devices (13, 15, 16, 19, 23, 33, 37) in accordance with the decoded input/output device address signal.

2. A bus control gate array according to claim 1, characterized in that said input/output device select signal generating means comprises a plurality of logic gates (53, 55...57) and said bus control gate array comprises a highly integrated one-chip semiconductor device.

3. A bus control gate array according to claim 1, characterized by further comprising memory select signal generating means (63) for decoding a memory address signal from said central processing element (9) and for generating a memory select signal $\overline{URM0}$, $\overline{URM1}$, $\overline{URM2}$, $\overline{URM3}$, $\overline{VR0}$, $\overline{VR1}$ for selecting one of said memory bank in accordance with the decoded memory address signal.

4. A bus control gate array according to claim 1 or 2, characterized by further comprising a highly integrated one-chip semiconductor device.

5. A bus control gate array according to claim 3, characterized in that said memory unit comprises a random access memory (15) and a read only memory (16) which respectively have a plurality of memory banks, and said memory select signal generating means (63) generates a read only memory select signal ($\overline{\text{UROM}}$) for selecting said read only memory in addition to said memory select signal ($\overline{\text{URM0}}$, $\overline{\text{URM1}}$, $\overline{\text{URM2}}$, $\overline{\text{URM3}}$) for selecting the one of said memory banks.

6.   A bus control gate array according to claim 3 or 4, characterized in that said memory select signal generating means (63) has a plurality of logic gates, and said bus control gate array comprises a one-chip highly integrated semiconductor element.

7.   A bus control gate array according to claim 3, 4, 5 or 6, characterized in that said memory unit comprises a plurality of memory banks (151, 152' 153' 154) each of which has a plurality of memory chips, and a chip selector for selecting any one of said plurality of memory chips, and said bus controller comprises memory bank selecting means (63) for generating a memory bank select signal for selecting any one of said memory banks.

# FIG. 1

FIG. 2

2/7

0172342

0172342

F I G. 3

```
A9  >
A8  >
A7  >                           ──>  UDMA
A6  >        I/O                ──>  UKEY
A5  >                           ──>  UCOM
A4  >        ADDRESS            ──>  ULC 0
A3  >                           ──>  ULC 1
A2  >        DECODER            ──>  UFDC
A1  >
A0  >
```

47

F I G. 6

```
                                ──>  URM 0
A19 >                           ──>  URM 1
A18 >        MEMORY             ──>  URM 2
A17 >                           ──>  URM 3
A16 >        ADDRESS            ──>  UROM
A15 >                           ──>  VR 0
A14 >        DECODER            ──>  VR 1
```

63

0172342

F I G. 4

FIG. 5

FIG. 7

0172342

F I G. 8

BUS CONTROLLER ~61

MEMORY ADDRESS DECODER ~63

$\overline{URM0}$

$\overline{URM1}$

$\overline{URM2}$

$\overline{URM3}$

MEMORY BANK 0
~15₁

CHIP SELECTOR 0

MEMORY BANK 1
~15₂

CHIP SELECTOR 1

MEMORY BANK 2
~15₃

CHIP SELECTOR 2

MEMORY BANK 3
~15₄

CHIP SELECTOR 3